# EUROPÄISCHE PATENTSCHRIFT

(11) **EP 0 548 517 B1**
(45) Veröffentlichungstag und Bekanntmachung des Hinweises auf die Patenterteilung: **11.10.1995**
(21) Anmeldenummer: 92119040.1
(22) Anmeldetag: 06.11.1992
(51) Int. Cl.: D03D 11/00, B64G 6/00

(54) **Textiles Flächengebilde**
Textile structure
Couche supérieur de surface

(30) Priorität: 21.12.1991 DE 4142538
(43) Veröffentlichungstag der Anmeldung: 30.06.1993
(73) Patentinhaber: Daimler-Benz Aerospace Aktiengesellschaft, 80995 München (DE)
(72) Erfinder: Fischer, Wolfgang, W-2802 Fischerhude (DE); Hartmanns, Jörg, Dr., W-2900 Oldenburg (DE); Kampmann, Lutz, W-2800 Bremen (DE); Müller-Wiesner, Detlef, Dr., W-2853 Harpstedt (DE); Reimerdes, Hans-Günter, Dr., W-2875 Ganderkesee (DE)
(74) Vertreter: Hansmann, Dierk, Dipl.-Ing.

(56) Entgegenhaltungen:
- EP-A- 0 439 274
- DE-A- 2 941 762
- DE-A- 3 300 158
- US-A- 4 922 969
- US-A- 4 923 741
- "Melliand Textilberichte", 11, 1981, Seiten 848 - 852
- "Industrie-Textilen", Dez. 1990, Seiten T 158 - T 162

## Beschreibung

Die Erfindung betrifft ein textiles Flächengebilde für den äußeren Schutz von Raumanzügen bei Aktivitäten außerhalb eines Raumfahrzeuges sowie zum Schutz von Weltraumstrukturen auf der Basis wenigstens zweier verschiedener Arten von synthetischen Fasern mit unterschiedlicher thermischer, chemischer und mechanischer Beständigkeit sowie mit unterschiedlicher Dichte, die zu einem dreidimensionalen Verband verarbeitet sind.

Bei Aufenthalten außerhalb ihres Raumfahrzeuges, sogenannten extravehicularen Aktivitäten (EVA), sind Astronauten und die sie schützenden Raumanzüge unmittelbar den Weltraumbedingungen ausgesetzt. Diese Bedingungen sind durch ein in mehrfacher Hinsicht hohes Gefährdungspotential charakterisiert, das unter anderem den möglichen Aufprall von Mikrometeoriten oder Trümmern, radioaktive Strahlen oder Teilchen sowie chemisch aggressive Substanzen, beispielsweise aus den Resten bzw. Zersetzungskomponenten des für die Lagereglungstriebwerke verwendeten Raketentreibstoffs und insbesondere atomaren Sauerstoff, umfaßt. Weiterhin muß ein solcher Raumfahrtanzug einen hinreichenden thermischen Schutz bieten, widerstandsfähig gegen Reibung und Verschleiß sein und elektrische Aufladungen bzw. Entladungen verhindern, die zum Entstehen mikroskopisch kleiner Löcher führen können. Schließlich muß das verwendete Materialsystem extrem beständig gegenüber allen Arten elektromagnetischer Strahlung sowie gegenüber den bei der Reinigung/Dekontamination eingesetzten Chemikalien sein.

Für den Schutz von Raumanzügen sowie von Weltraumstrukturen ist aus der US-PS 4 923 741 ein dort als ORTHOFABRIC bezeichneter weicher laminarer Verbund bekannt, der aus einer äußeren Schicht aus gewebten expandierten Tetrafluorethylenfasern mit dem Handelsnamen GORETEX sowie einer darunter liegenden Schicht aus meta- und para-Aramidfasern (Polyparaphenylenterephtalamid) mit den Handelsnamen NOMEX oder KEVLAR besteht. Die äußere Schicht soll dabei gegen atomaren Sauerstoff sowie gegen Abrasion schützen, während die darunter liegende Schicht die mechanische Widerstandsfähigkeit sicherstellen soll. Sie weist zusätzlich elektrisch leitende Fasern gegen Aufladungen bzw. Entladungen auf und ist außerdem mit einer Beschichtung aus Silikon oder FEP (Tetrafluorethylen-Fluorethylen-Propylen) versehen, die gegen die chemische Einwirkung von Treibstoffresten schützen soll.

Vervollständigt wird dieses bekannte Verbundmaterial durch mehrere Schichten zur thermischen Isolation, eine Schutzschicht gegen kurzwellige elektromagnetische Strahlung sowie eine innere Schicht als Schutz gegen Abrasion und mechanische Beschädigung, unter anderem als Schutz gegen den erwähnten Aufprall von Mikrometeoriten.

Nachteilig bei diesem bekannten Materialverbund ist nicht nur der hohe Kostenaufwand, der zu seiner Herstellung erforderlich ist, sondern auch der vielschichtige Aufbau, der zu einem relativ schweren, dicken und wenig flexiblen Material führt.

Daneben ist aus der DE 33 00 158 A1 ein Verbundwerkstoff für Schutzanzüge bekannt, der dreilagig aufgebaut ist und der aus einer textilen, wasserdampfdurchlässigen Außenschicht, einer Zwischenschicht aus einem metallisierten textilen Flächengebilde mit guter Schutzwirkung gegen elektromagnetische Felder sowie einer Innenschicht aus hautfreundlichen Material besteht. Für einen Einsatz unter Weltraumbedingungen ist dieser bekannt Werkstoff jedoch nicht geeignet.

Weiterhin sind sowohl aus der DE 29 41 762 A1 als auch aus den Literaturstellen "Melliand Textilberichte", 11, 1981, Seite 848 - 852, sowie "Industrie-Textilen", Dez. 1990, Seite T 158 - T 162, mehrlagig aufgebaute Materialien für Hitzeschutzbekleidungen sowie für Raumfahrtanwendungen bekannt geworden.

Schließlich ist aus der US-PS 4 922 969 ein textiles Flächengebilde der eingangs genannten Art bekanntgeworden, bei dem Fasern mit einer speziellen physikalischen oder chemischen Eigenschaft, die für einen nicht näher spezifizierten Einsatzfall vorteilhaft ist, an einer oder beiden Oberflächen dieses Flächengebildes konzentriert sein können.

Aufgabe der Erfindung ist es, ein textiles Flächengebilde der eingangs genannten Art so auszubilden, daß es als äußere Hülle die inneren Schichten eines Raumanzuges gegenüber den Einwirkungen der Umgebung zu schützen vermag und dabei eine möglichst hohe Mobilität des Astronauten bei einer gleichzeitig minimalen Verschlechterung der Schutzeigenschaften während der gesamten vorgesehenen Einsatzdauer eines solchen Schutzsystems sicherstellt und daß es zugleich auch für eine Verwendung in Schutzanzügen für terrestrische Einsätze geeignet ist.

Die Erfindung löst diese Aufgabe durch ein textiles Flächengebilde mit den kennzeichnenden Merkmalen des Patentanspruchs 1. Das erfindungsgemäße textile Flächengebilde weist dabei unter anderem den Vorteil auf, daß ein Schutz gegen den Aufprall von Mikrometeoriten bereits allein durch seine Beschaffenheit gegeben ist bzw. durch diese nachhaltig verbessert wird, und es so keiner zusätzlichen separaten, weiter innen liegenden, speziellen Schicht für diesen Zweck bedarf. Zugleich bietet das textile Flächengebilde nach der Erfindung den Vorteil, daß es eine Integration unterschiedlicher Fasern mit jeweils spezifischen Eigenschaften in einem dreidimensional aufgebauten Verband vorsieht und damit das Erreichen der angestrebten multifunktionalen Schutzwirkung in einem einzigen Textil ermöglicht.

Die in den Unteransprüchen angegebenen vorteilhaften Weiterbildungen des erfindungsgemäßen textilen Flächengebildes betreffen sowohl den Einsatz von Materialien, die sich als besonders geeignet für eine Verwendung im Rahmen der Erfindung erwiesen haben, als auch vorteilhafte Möglichkeiten zur Herstellung dieses textilen Gebildes.

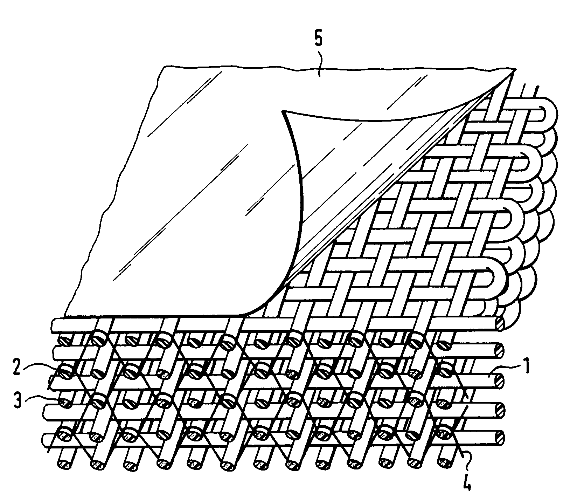

Im folgenden soll die Erfindung anhand eines in der Zeichnung dargestellten Ausführungsbeispiels näher erläutert werden. Die Figur zeigt in perspektivischer Darstellung einen Ausschnitt aus einem textilen Flächengebilde.

Bei dem dargestellten Ausführungsbeispiel handelt es sich um ein dreidimensional aufgebautes Gewebe, bei dem die Schußfasern 1 in der Zeichnung von links nach rechts bzw. von rechts nach links verlaufen, während zwei unterschiedliche Arten von Kettfasern 2 und 3 senkrecht dazu in der Tiefenrichtung verlaufen. Zusätzlich sind die Kettfasern 2 bzw. 3 in Dickenrichtung über weitere Fasern 4 zu einem dreidimensionalen Gewebe miteinander verbunden. Den äußeren Abschluß des Gewebes bildet eine Beschichtung 5, auf deren Beschaffenheit, ebenso wie auf diejenige der Fasern 1 bis 4, nachfolgend noch näher eingegangen wird.

Bei dem hier beschriebenen Ausführungsbeispiel der Erfindung bestehen die Kettfasern 2 und 3 aus zwei unterschiedlichen Arten von Werkstoffen, wobei, wie aus der Figur ersichtlich ist, sich der relative Anteil der beiden unterschiedlichen Faserarten am Gesamt-Gewebe in Dickenrichtung gleichsinnig ändert, d.h. monoton zu- bzw. abnimmt. So handelt es sich bei der Faser 2 um eine solche auf Polyethylenbasis, die unter dem Handelsnamen DYNEEMA bekannt ist. Diese Faser ist vorwiegend im äußeren Bereich des dreidimensional aufgebauten Gewebes eingesetzt und wird zugleich auch für die Schußfäden 1 verwendet. Sie weist einen hohen Elastizitätsmodul auf und vereint eine geringe Dichte mit hoher mechanischer Festigkeit, so daß der Anteil dieser Faser in den äußeren Lagen des Gewebes in erster Linie den Aufprallschutz gegenüber Mikrometeoriten sowie die hervorragenden mechanischen Eigenschaften des hier beschriebenen textilen Gebildes im Hinblick auf Rißzähigkeit, Ermüdungsfestigkeit und den Widerstand gegenüber abrasivem Verschleiß gewährleistet. Zugleich weist diese Faser eine gute Beständigkeit gegenüber ultravioletter Strahlung auf.

Der zweite Teil der Kettfasern, die überwiegend im inneren Bereich verwendeten Fasern 3, besteht im Fall des hier beschriebenen Ausführungsbeispiels aus einer Aramidfaser mit der Handelsbezeichnung NOMEX, die unter anderem den Vorteil einer vergleichsweise guten thermischen Beständigkeit aufweist. An ihrer Stelle können in gleicher Weise aber auch andere Aramidfasern, wie KEVLAR oder TWARON, eingesetzt werden. Gemeinsam ist diesen Fasern ihre Unempfindlichkeit gegenüber chemisch aggressiven Medien.

Um die Beständigkeit des Gewebes sowohl gegenüber chemischen Einflüssen als auch gegenüber thermischer und mechanischer Beanspruchung weiter zu erhöhen und es zugleich gegen elektromagnetische Strahlung zu schützen und elektrische Aufladungen zu verhindern, ist das dreidimensionale Gewebe mit einer Beschichtung 5 versehen. Diese besteht im vorliegenden Fall aus einem Copolymer, das je 50 % Ehtylen und 50 % Tetrafluorethylen enthält und das als ETFE bezeichnet wird. Die Beschichtung 5 wird vorzugsweise als dünne Folie aufgebracht und enthält zur Verbesserung des Schutzes gegen atomaren Sauerstoff, ionisierende Strahlung sowie gegen Aufladungseffekte zusätzlich Anteile eines Metalloxids. Aus dem gleichen Grund bestehen auch die Fasern 4 aus einem metallischen Werkstoff.

Das hier beschriebene textile Flächengebilde wird durch dreidimensionales Weben hergestellt, wobei eine solche Struktur auch als sogenannte Interlock-Struktur hergestellt werden kann, bei der zwei oder mehr Einzellagen wechselseitig miteinander verbunden sind. Im Rahmen der Erfindung ist es aber auch möglich, ein derartiges dreidimensionalaufgebautes textiles Gebilde durch andere Techniken, wie Flechten, Knüpfen oder Stricken, herzustellen. Wichtig ist, daß bei jedem dieser dreidimensionalen textilen Gebilde die Möglichkeit gegeben ist, verschiedene Arten von Fasern miteinander zu verbinden und/oder die Dichte, d.h. die Anzahl der Fasern pro Flächeneinheit, über die Dicke des Gewebes zu variieren und auf diese Weise den beschriebenen Gradientenverlauf zu erzielen und gleichzeitig durch den 3-D-Verband die Fäden des Verbandes in ihrer Lage zu fixieren. Dabei ist es weiterhin auch möglich, die Dicke oder die Gestalt des textilen Gebildes zu modifizieren, ohne daß hierbei der Faserverlauf unterbrochen werden muß. Schließlich ist es möglich, halbdurchlässige Polyolefin- (GORETEX) oder Polyester-Folien (SYMPATEX) als äußere Schutzschicht 5 zu verwenden, um die Schutzwirkung noch weiter den jeweils vorliegenden Bedingungen anzupassen.

## Patentansprüche

1. Textiles Flächengebilde für den äußeren Schutz von Raumanzügen bei Aktivitäten außerhalb eines Raumfahrzeuges sowie zum Schutz von Weltraumstrukturen auf der Basis wenigstens zweier verschiedener Arten von synthetischen Fasern (2,3) mit unterschiedlicher thermischer, chemischer und mechanischer Beständigkeit sowie mit unterschiedlicher Dichte, die zu einem dreidimensionalen Verband verarbeitet sind, dadurch gekennzeichnet, daß der Verband einen von außen nach innen verlaufenden Gradienten bezüglich der Art der Fasern des Gewebes aufweist, wobei der Anteil der Faserart (2) mit der höheren mechanischen Festigkeit von außen nach innen monoton abnimmt und der Anteil der Faserart (3) mit der höheren thermischen und chemischen Beständigkeit von außen nach innen monoton zunimmt.

2. Textiles Flächengebilde nach Anspruch 1, dadurch gekennzeichnet, daß daß eine der Fasern (2,3) aus Polyethylen besteht.

3. Textiles Flächengebilde nach Anspruch 1 oder 2, dadurch gekennzeichnet, daß eine der Fasern (2,3) aus Aramid (Polyparaphenylenterephtalamid) besteht.

4. Textiles Flächengebilde nach einem der Ansprüche 1 bis 3, dadurch gekennzeichnet, daß zusätzlich metallische Fasern (4) eingearbeitet sind.

5. Textiles Flächengebilde nach einem der Ansprüche 1 bis 4, dadurch gekennzeichnet, daß es durch dreidimensionales Weben hergestellt ist.

6. Textiles Flächengebilde nach einem der Ansprüche 1 bis 4, dadurch gekennzeichnet, daß daß es durch dreidimensionales Flechten hergestellt ist.

7. Textiles Flächengebilde nach einem der Ansprüche 1 bis 4, dadurch gekennzeichnet, daß daß es durch dreidimensionales Knüpfen hergestellt ist.

8. Textiles Flächengebilde nach einem der Ansprüche 1 bis 7, dadurch gekennzeichnet, daß es auf der Außenseite mit einer Beschichtung (5) zum Schutz gegen thermische, chemische Beanspruchung und/oder elektromagnetischer Strahlung versehen ist.

9. Textiles Flächengebilde nach Anspruch 8, dadurch gekennzeichnet, daß die Beschichtung (5) aus Silikon besteht.

10. Textiles Flächengebilde nach Anspruch 8, dadurch gekennzeichnet, daß daß die Beschichtung (5) aus einem Copolymer besteht.

11. Textiles Flächengebilde nach Anspruch 10, dadurch gekennzeichnet, daß die Beschichtung (5) etwa zur Hälfte aus Ethylen und aus Tetrafluorethylen besteht.

12. Textiles Flächengebilde nach Anspruch 10 oder 11, dadurch gekennzeichnet, daß die Beschichtung (5) in Form einer dünnen Folie aufgebracht ist.

13. Textiles Flächengebilde nach einem der Ansprüche 8 bis 12, dadurch gekennzeichnet, daß die Beschichtung (5) Anteile eines Metalloxides enthält.

14. Textiles Flächengebilde nach einem der Ansprüche 1 bis 3, dadurch gekennzeichnet, daß einzelne Fasern metallisch beschichtet sind.

## Claims

1. A flat textile structure for the external protection of space suits during activities outside a spacecraft and for the protection of outer space structures based on at least two different types of synthetic fibre (2, 3) having different thermal, chemical and mechanical strengths and different densities, which fibres are worked to form a three-dimensional structure, characterised in that the structure has a gradient running from the outside inwards in respect of the type of fibre of the weave, the proportion of the fibre type (2) having the greater mechanical strength decreasing monotonically from the outside inwards and the proportion of the fibre type (3) having the greater thermal and chemical strength increasing monotonically from the outside inwards.

2. A flat textile structure according to claim 1, characterised in that one of the fibres (2, 3) is made of polyethylene.

3. A flat textile structure according to claim 1 or 2, characterised in that one of the fibres (2, 3) is made of aramide (polyparaphenylenterephtalamide).

4. A flat textile structure according to one of claims 1 to 3, characterised in that metallic fibres (4) are additionally worked in.

5. A flat textile structure according to one of claims 1 to 4, characterised in that it is manufactured by three-dimensional weaving.

6. A flat textile structure according to one of claims 1 to 4, characterised in that it is manufactured by three-dimensional braiding.

7. A flat textile structure according to one of claims 1 to 4, characterised in that it is manufactured by three-dimensional knotting.

8. A flat textile structure according to one of claims 1 to 7, characterised in that it is provided on the outside with a coating (5) for protection against thermal, chemical stressing and/or electromagnetic radiation.

9. A flat textile structure according to claim 8, characterised in that the coating (5) is made of silicon.

10. A flat textile structure according to claim 8, characterised in that the coating (5) is made of a copolymer.

11. A flat textile structure according to claim 10, characterised in that the coating (5) is made approximately half of ethylene and half of tetrafluorethylene.

12. A flat textile structure according to claim 10 or 11, characterised in that the coating (5) is applied in the form of a thin film.

13. A flat textile structure according to one of claims 8 to 12, characterised in that the coating (5) contains a metal oxide.

14. A flat textile structure according to one of claims 1 to 3, characterised in that individual fibres are metal-coated.

## Revendications

1. Structure tissée destinée à la protection extérieure de combinaisons spatiales utilisées dans le cadre d'activités à l'extérieur de l'astronef ainsi qu'à la protection de structures spatiales composée à la base d'au moins deux tas de fibres synthétiques (2, 3) présentant des résistances thermiques, chimiques et mécaniques différentes ainsi que des densités différentes, traitées pour former un assemblage tridimensionnel, caractérisée en ce que l'assemblage présente un gradient d'indice croissant ou décroissant de l'extérieur vers l'intérieur en fonction du type de fibres textiles, la proportion du type de fibres (2) présentant la résistance mécanique la plus élevée accusant une décroissance monotone de l'extérieur vers l'intérieur et la proportion du type de fibres (3) présentant des résistances thermiques et chimiques élevées accusant une croissance monotone de l'extérieur vers l'intérieur.

2. Structure tissée selon la revendication 1, caractérisée en ce que une des fibres (2, 3) se compose de polyéthylène.

3. Structure tissée selon l'une ou l'autre des revendications 1 et 2, caractérisée en ce que une des fibres (2, 3) se compose d'aramide (polyparaphenylenterephtalamide).

4. Structure tissée selon l'une ou l'autre des revendications 1 à 3, caractérisée en ce que des fibres métalliques supplémentaires (4) sont intégrées.

5. Structure tissée selon l'une ou l'autre des revendications 1 à 4, caractérisée en ce que cette structure est fabriquée à partir d'un tissage tridimensionnel.

6. Structure tissée selon l'une ou l'autre des revendications 1 à 4, caractérisée en ce que cette structure est fabriquée à partir des nattes tridimensionnelles.

7. Structure tissée selon l'une ou l'autre des revendications 1 à 4, caractérisée en ce que cette structure est fabriquée à partir de noeuds tridimensionnels.

8. Structure tissée selon l'une ou l'autre des revendications 1 à 7, caractérisée en ce que cette structure est pourvue sur sa face extérieure d'un revêtement (5) destiné à la protéger contre les charges thermiques et chimiques et/ou contre les rayons électromagnétiques.

9. Structure tissée selon la revendication 8, caractérisée en ce que le revêtement (5) se compose de silicone.

10. Structure tissée selon la revendication 8, caractérisée en ce que le revêtement (5) se compose d'un copolymère.

11. Structure tissée selon la revendication 10, caractérisée en ce que le revêtement (5) se compose environ de 50% d'éthylène et de tétrafluoréthylène.

12. Structure tissée selon l'une ou l'autre des revendications 10 et 11, caractérisée en ce que le revêtement (5) est appliqué sous la forme d'une fine feuille.

13. Structure tissée selon l'une ou l'autre des revendications 8 à 12, caractérisée en ce que le revêtement (5) contient un pourcentage d'oxyde de métal.

14. Structure tissée selon l'une ou l'autre des revendications 1 à 3, caractérisée en ce que les différentes fibres sont recouvertes de métal.
